# EUROPEAN PATENT APPLICATION

(11) **EP 2 573 647 A1**
(43) Date of publication of application: **27.03.2013**
(21) Application number: 11007774.0
(22) Date of filing: 23.09.2011
(51) Int. Cl.: G06F 1/26

(54) **Extensible external power supply**

(71) Applicant: SilverStone Technology Co., Ltd., Zhonghe Dist., New Taipei City 235 (TW)
(72) Inventor: Huang, Hsin-Sheng, Zhonghe Dist. New Taipei City 235 (TW)
(74) Representative: Urner, Peter

(57) **Abstract**

An extensible external power supply (10) is applied to a computer host (20). The extensible external power supply (10) includes a plurality of power modules (102), a power integrated unit (108), and a voltage conversion unit (202). Each power module (102) receives an AC input voltage (Vac1) to produce an output power (Po2). The power integrated unit (108) is electrically connected to the power modules (102) to receive the output powers (Po1) and produce a DC output voltage (Vdc). The voltage conversion unit (202) is electrically connected to the power integrated unit (108) to receive the DC output voltage (Vdc) and convert a voltage level of the DC output voltage (Vdc) into different voltage levels.

## Description

### BACKGROUND OF THE INVENTION

### Field of the Invention

The present invention relates generally to an extensible external power supply, and more particularly to an extensible external power supply which is applied to a computer host.

### Description of Prior Art

At present, the power supply apparatus for computer hosts provides various different standards of power output, including +12 volts, -12 volts, +5 volts, +3.3 volts, +5VSB, and so on. These different power outputs are provided to supply the required power for different electronic apparatuses of the computer hosts, such as hard disk drives, optical disk drives, CD-RW optical drives, motherboards, and built-in speakers.

With the development of Internet and multimedia technology, the output power of the power supply apparatus has significantly increased. Beside of the above-mentioned electronic apparatuses, other inner hardware equipment and peripheral devices of the computer hosts are used to rise the demand for higher output power of the power supply apparatus. The basic 250-watt power has not been sufficient to meet current demand, 450-watt or larger power have been gradually recognized as the standard specification of the power supply apparatus. Hence, the increasing power output can provide sufficient power supply for the progressive hardware equipment.

Because the existing power supply apparatus is fabricated inside the computer host, poor space is not good for development of increasing power output, namely, the rated output power is limited due to the restricted space. On the other hand, a small-size design of the power supply apparatus is difficult when the required output power thereof is tremendously increased.

Accordingly, it is desirable to provide an extensible external power supply which is applied to a computer host to flexibly adjust the amount of the power modules and reliably achieve the demand of high power operation according to the required output power for system loads.

### SUMMARY OF THE INVENTION

An object of the invention is to provide an extensible external power supply to solve the above-mentioned problems. The extensible external power supply is applied to a computer host, and the extensible external power supply includes at least one power module and a power integrated unit, and a voltage conversion unit.

The power module receives an AC input voltage to produce an output power. The power integrated unit is electrically connected to the power module to receive the output power and produce a DC output voltage. The voltage conversion unit is electrically connected to the power integrated unit to receive the DC output voltage and convert different voltage levels of the DC output voltage.

It is to be understood that both the foregoing general description and the following detailed description are exemplary, and are intended to provide further explanation of the invention as claimed. Other advantages and features of the invention will be apparent from the following description, drawings and claims.

### BRIEF DESCRIPTION OF DRAWING

The features of the invention believed to be novel are set forth with particularity in the appended claims. The invention itself, however, may be best understood by reference to the following detailed description of the invention, which describes an exemplary embodiment of the invention, taken in conjunction with the accompanying drawings, in which:
Fig. 1 is a circuit block diagram of an extensible external power supply according to a first embodiment of the present invention;
Fig. 2 is a circuit block diagram of the extensible external power supply according to a second embodiment of the present invention;
Fig. 3 is a perspective view of the extensible external power supply according to the first embodiment of the present invention; and
Fig. 4 is a perspective view of the extensible external power supply according to the second embodiment of the present invention.

### Detailed description of the invention

Reference will now be made to the drawing figures to describe the present invention in detail.

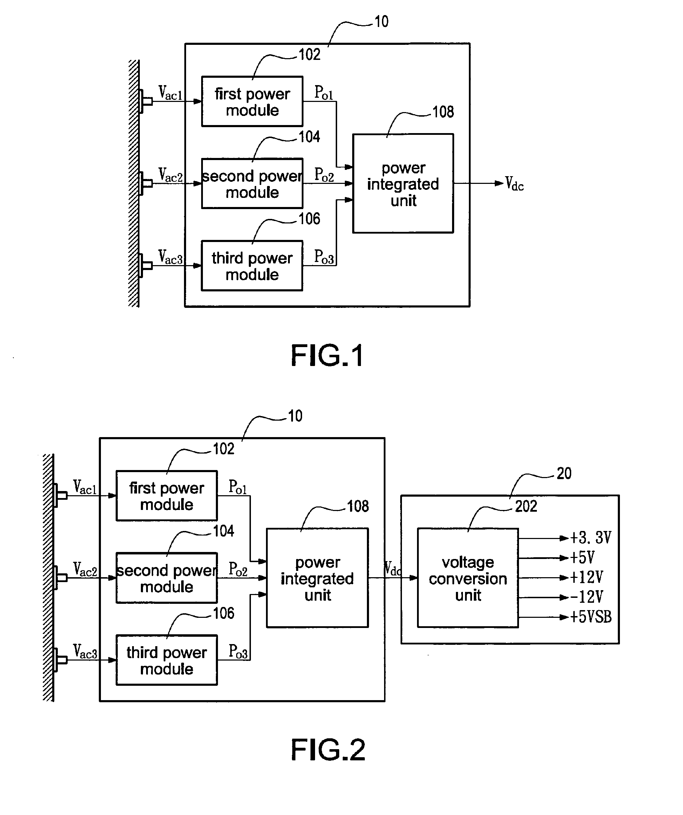

Reference is made to Fig. 1 which is a circuit block diagram of an extensible external power supply according to a first embodiment of the present invention. The extensible external power supply 10 is applied to a computer host (not shown). The extensible external power supply 10 includes at least one power module and a power integrated unit 108.

The power module receives an AC input voltage to produce an output power. In this embodiment, three power modules (N=3) are exemplified for further demonstration, but not limited. That is, the extensible external power supply 10 includes three power modules, namely, a first power module 102, a second power module 104, and a third power module 106. The first power module 102 receives a first AC input voltage Vac1 to produce a first output power Po1. The second power module 104 receives a second AC input voltage Vac2 to produce a second output power Po2. Also, the third power module 106 receives a third AC input voltage Vac3 to produce a third output power Po3.

The power integrated unit 108 is electrically connected to these power modules to receive the output powers and produce a DC output voltage Vdc. That is, the power integrated unit 108 is electrically connected to the first power module 102 to receive the first output power Po 1 produced from the first power module 102. The power integrated unit 108 is electrically connected to the second power module 104 to receive the second output power Po2 produced from the second power module 104. Also, the power integrated unit 108 is electrically connected to the third power module 106 to receive the third output power Po3 produced from the third power module 106.

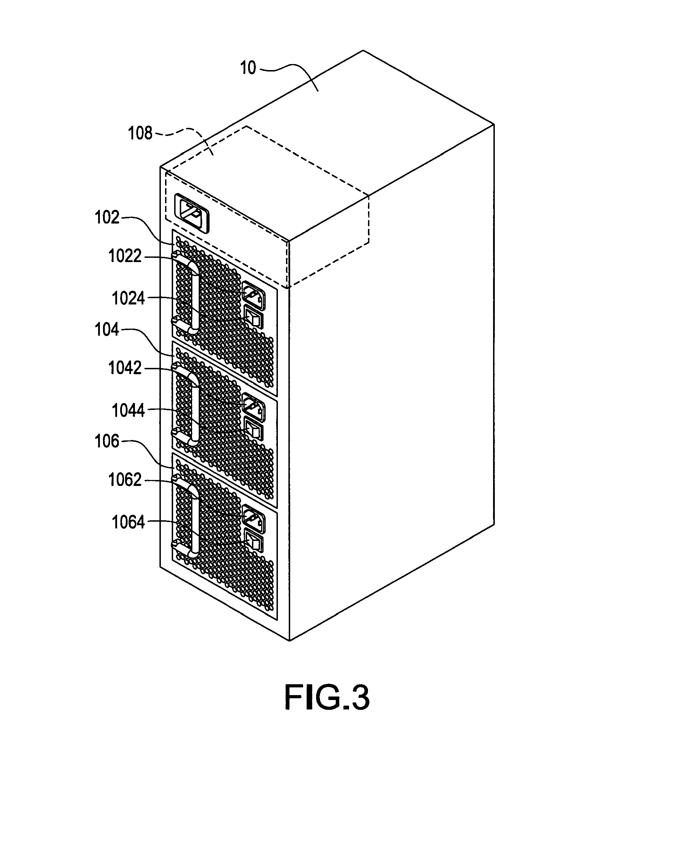

The detailed circuit structure and operation principle of the extensible external power supply 10 are described as follows. Reference is made to Fig. 3 which is a perspective view of the extensible external power supply according to the first embodiment of the present invention. The extensible external power supply 10 is installed in a host casing (not labeled). The power modules are contained in the corresponding containing space of the host casing. As mentioned above, three power modules (N=3) are exemplified for further demonstration and it is assumed that a rated output power of each power module is 1,000 watts. Also, the amount of the power modules is determined and adjusted according to the required output power for system loads. That is, only one power module needs to be used if the required output power for system loads, such as computer hardware equipment, is less than 1,000 watts. If the required output power for system loads is greater than 1,000 watts but less than 2,000 watts, two power modules can be installed to able to provide enough output power. That is, further one power module is extended based on the extensible external power supply 10 having a power module to increase maximum output power of the extensible external power supply 10, thus meeting the required output power for system loads. In particular, a holding unit (not labeled) is used to simply pull the extended power modules into the corresponding containing spaces to complete installing the extended power module in the extensible external power supply 10. In addition, the holding unit is used to simply push the unnecessary power modules away from the extensible external power supply 10 after shutting down the extensible external power supply 10. Accordingly, the amount of the power modules can be increased and decreased according to the required output power for system load, thus achieving optimal operation of the extensible external power supply 10.

If the required output power for system loads is greater than 2,000 watts but less than 3,000 watts, the extensible external power supply 10 needs to include three power modules, namely, the first power module 102, the second power module 104, and the third power module 106. Also, each power module is supplied through a corresponding AC input voltage, which can be an AC utility power. The first power module 102 has a first power input terminal 1022 and a first power switch 1024. The second power module 104 has a second power input terminal 1042 and a second power switch 1044. Also, the third power module 106 has a third power input terminal 1062 and a third power switch 1064. Hence, the first power module 102 receives the first AC input voltage Vac1 via the first power input terminal 1022 to turn on or turn off the first power module 102 through the first power switch 1024. Similarly, the second power module 104 receives the second AC input voltage Vac2 via the second power input terminal 1042 to turn on or turn off the second power module 104 through the second power switch 1044. Also, the third power module 106 receives the third AC input voltage Vac3 via the third power input terminal 1062 to turn on or turn off the third power module 106 through the third power switch 1064.

In particular, each power module is an AC/DC converter. In addition, the extensible external power supply 10 further includes at least one electromagnetic interference filter (not shown). In this embodiment, the first power module 102 is exemplified for further demonstration. When the first power module 102 receives the first AC input voltage Vac 1 to turn on or turn off the first power module 102, noise in the first AC input voltage Vac1 is eliminated through the electromagnetic interference filter. Afterward, the filtered first AC input voltage Vac 1 is converted into a DC output voltage to produce the first output power Po1 through the first power module 102 (namely, the AC/DC converter). Similarly, the second power module 104 (namely, the AC/DC converter) is used to convert the second AC input voltage Vac2 into a DC output voltage to produce the second output power Po2. Also, the third power module 106 (namely, the AC/DC converter) is used to convert the third AC input voltage Vac3 into a DC output voltage to produce the third output power Po3.

Especially to deserve to be mentioned, the power integrated unit 108 is electrically connected to the power modules to receive the output powers and produce a DC output voltage Vdc, which is typically 12 volts. The power integrated unit 108 includes a power detection circuit (not shown) and a power control circuit (not shown). The power detection circuit detects a consumption power of the computer host. The power control circuit is electrically connected to the power detection circuit and the power modules to equally distribute the output power produced from the power modules according to the consumption power of the computer host. That is, the power control circuit controls the output power produced form each power module is about 700 watts when the required output power for system loads is about 2,100 watts detected by the power detection circuit. Notice that the power control circuit dynamically equally distribute the output power produced from the power modules when the consumption power of the computer host is varied, thus increasing lifetime of the power modules because of the balanced power supply.

Reference is made to Fig. 2 which is a circuit block diagram of the extensible external power supply according to a second embodiment of the present invention. The extensible external power supply 10 is applied to a computer host 20. The extensible external power supply 10 includes at least one power module, a power integrated unit 108, and a voltage conversion unit 202. In particular, the voltage conversion unit 202 is installed inside the computer host 20.

Each power module receives an AC input voltage to produce an output power. In this embodiment, three power modules (N=3) are exemplified for further demonstration, but not limited. That is, the extensible external power supply 10 includes three power modules, namely, a first power module 102, a second power module 104, and a third power module 106. The first power module 102 receives a first AC input voltage Vac1 to produce a first output power Po1. The second power module 104 receives a second AC input voltage Vac2 to produce a second output power Po2. Also, the third power module 106 receives a third AC input voltage Vac3 to produce a third output power Po3.

The power integrated unit 108 is electrically connected to these power modules to receive the output powers and produce a DC output voltage Vdc. That is, the power integrated unit 108 is electrically connected to the first power module 102 to receive the first output power Po 1 produced from the first power module 102. The power integrated unit 108 is electrically connected to the second power module 104 to receive the second output power Po2 produced from the second power module 104. Also, the power integrated unit 108 is electrically connected to the third power module 106 to receive the third output power Po3 produced from the third power module 106.

The voltage conversion unit 202 is electrically connected to the power integrated unit 108 to receive the DC output voltage Vdc and convert different voltage levels of the DC output voltage Vdc. In particular, the voltage conversion unit 202 is a DC/DC converter, which can be a buck converter, a forward converter, or a flyback converter, but not limited. Also, the DC/DC converter is a multi-output DC/DC converter, which can provide different voltage outputs, such as +3.3 volts, +5 volts, +12 volts, -12 volts, or +5 VSB as shown in Fig. 2, but not limited for supplying power to inner circuits of the computer hosts 20.

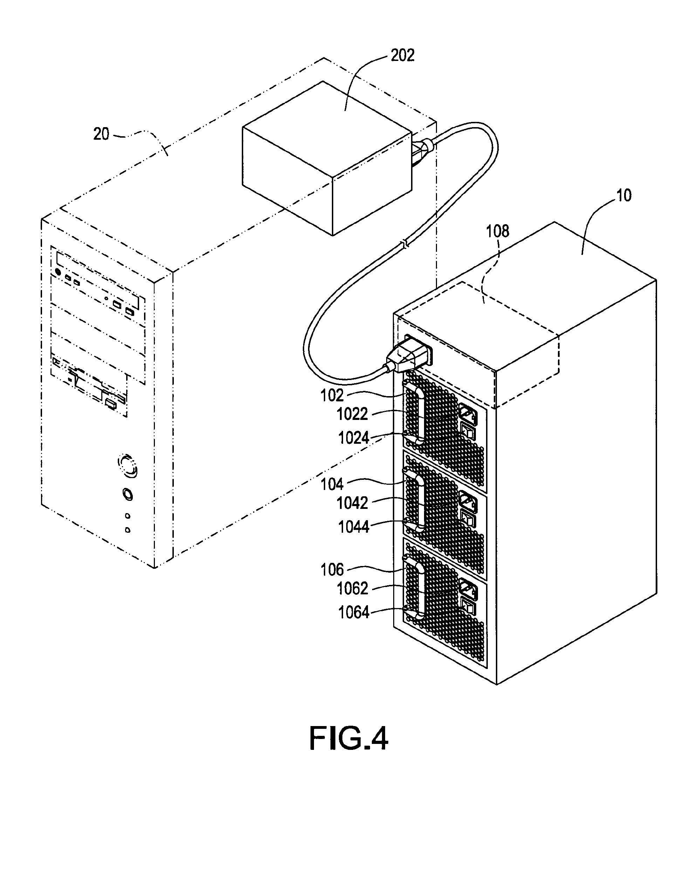

The detailed circuit structure and operation principle of the extensible external power supply 10 are described as follows. Reference is made to Fig. 4 which is a perspective view of the extensible external power supply according to the second embodiment of the present invention. The extensible external power supply 10 is installed in a host casing (not labeled). The power modules are contained in the corresponding containing space of the host casing. As mentioned above, three power modules (N=3) are exemplified for further demonstration and it is assumed that a rated output power of each power module is 1,000 watts. Also, the amount of the power modules is determined and adjusted according to the required output power for system loads. That is, only one power module needs to be used if the required output power for system loads, such as computer hardware equipment, is less than 1,000 watts. If the required output power for system loads is greater than 1,000 watts but less than 2,000 watts, two power modules can be installed to able to provide sufficient output power. That is, further one power module is extended based on the extensible external power supply 10 having a power module to increase maximum output power of the extensible external power supply 10, thus meeting the required output power for system loads. In particular, a holding unit (not labeled) is used to simply pull the extended power modules into the corresponding containing spaces to complete installing the extended power module in the extensible external power supply 10. In addition, the holding unit is used to simply push the unnecessary power modules away from the extensible external power supply 10 after shutting down the extensible external power supply 10. Accordingly, the amount of the power modules can be increased and decreased according to the required output power for system load, thus achieving optimal operation of the extensible external power supply 10.

If the required output power for system loads is greater than 2,000 watts but less than 3,000 watts, the extensible external power supply 10 needs to include three power modules, namely, the first power module 102, the second power module 104, and the third power module 106. Also, each power module is supplied through a corresponding AC input voltage, which can be an AC utility power. The first power module 102 has a first power input terminal 1022 and a first power switch 1024. The second power module 104 has a second power input terminal 1042 and a second power switch 1044. Also, the third power module 106 has a third power input terminal 1062 and a third power switch 1064. Hence, the first power module 102 receives the first AC input voltage Vac1 via the first power input terminal 1022 to turn on or turn off the first power module 102 through the first power switch 1024. Similarly, the second power module 104 receives the second AC input voltage Vac2 via the second power input terminal 1042 to turn on or turn off the second power module 104 through the second power switch 1044. Also, the third power module 106 receives the third AC input voltage Vac3 via the third power input terminal 1062 to turn on or turn off the third power module 106 through the third power switch 1064.

In particular, each power module is an AC/DC converter. In addition, the extensible external power supply 10 further includes at least one electromagnetic interference filter (not shown). In this embodiment, the first power module 102 is exemplified for further demonstration. When the first power module 102 receives the first AC input voltage Vac1 to turn on or turn off the first power module 102, noise in the first AC input voltage Vac1 is eliminated through the electromagnetic interference filter. Afterward, the filtered first AC input voltage Vac1 is converted into a DC output voltage to produce the first output power Po1 through the first power module 102 (namely, the AC/DC converter). Similarly, the second power module 104 (namely, the AC/DC converter) is used to convert the second AC input voltage Vac2 into a DC output voltage to produce the second output power Po2. Also, the third power module 106 (namely, the AC/DC converter) is used to convert the third AC input voltage Vac3 into a DC output voltage to produce the third output power Po3.

Especially to deserve to be mentioned, the power integrated unit 108 is electrically connected to the power modules to receive the output powers and produce a DC output voltage Vdc, which is typically 12 volts. The power integrated unit 108 includes a power detection circuit (not shown) and a power control circuit (not shown). The power detection circuit detects the consumption power of the computer host. The power control circuit is electrically connected to the power detection circuit and the power modules to equally distribute the output power produced from the power modules according to the consumption power of the computer host. That is, the power control circuit controls the output power produced form each power module is about 700 watts when the required output power for system loads is about 2,100 watts detected by the power detection circuit. Notice that the power control circuit dynamically equally distribute the output power produced from the power modules when the consumption power of the computer host is varied, thus increasing lifetime of the power modules because of the balanced power supply.

In conclusion, the present invention has following advantages:
1. The amount of the power modules of the extensible external power supply 10 is flexibly adjusted according to the consumption power of the computer host 20;
2. The extensible external power supply 10 is installed outside the computer host 20 to significantly reduce size of the computer host 20 as well as achieve high power output;
3. The power detection circuit detects the required output power for system loads and the power control circuit equally distributes output power produced form the power modules, thus increasing lifetime of the power modules because of the balanced power supply; and
4. The power control circuit dynamically distributes the output power produced from the power modules when the consumption power of the computer host is varied, thus achieving the function of dynamic power distribution.

## Claims

1. An extensible external power supply (10) applied to a computer host (20); the extensible external power supply (10) comprising:
at least one power module (102) receiving an AC input voltage (Vac1) to produce an output power (Po1);
a power integrated unit (108) electrically connected to the power module (102) to receive the output power (Po1) and produce a DC output voltage (Vdc); and
a voltage conversion unit (202) electrically connected to the power integrated unit (108) to receive the DC output voltage (Vdc) and convert different voltage levels of the DC output voltage (Vdc).

2. The extensible external power supply (10) of claim 1, wherein the power integrated unit (108) comprises:
a power detection circuit detecting a consumption power of the computer host (20); and
a power control circuit electrically connected to the power detection circuit and the power module (102) to equally distribute the output power produced from the power module (102) according to the consumption power of the computer host (20).

3. The extensible external power supply (10) of claim 1, wherein each power module (102) is an AC/DC converter.

4. The extensible external power supply (10) of claim 1, wherein the extensible external power supply (10) further comprises at least one electromagnetic interference filter to eliminate noise in the AC input voltage (Vac1) and prevent conductive electromagnetic interference.

5. The extensible external power supply (10) of claim 1, wherein each power module (102) is contained in a host casing with a plurality of containing spaces.

6. The extensible external power supply (10) of claim 1, wherein the amount of the power modules (102) is determined according to the consumption power of the computer host (20).

7. The extensible external power supply (10) of claim 1, wherein each AC input voltage (Vac1) is provided through an AC utility power.

8. The extensible external power supply (10) of claim 1, wherein the voltage conversion unit (202) is a DC/DC converter.

9. The extensible external power supply (10) of claim 1, wherein the DC/DC converter is a multi-output DC/DC converter.

10. The extensible external power supply (10) of claim 1, wherein the DC/DC converter is a buck converter, a forward converter, or a flyback converter.

11. The extensible external power supply (10) of claim 1, wherein the voltage conversion unit (202) is disposed inside the computer host (20).

## Amended claims

### Amended claims in accordance with Rule 137(2) EPC.

**1.** An extensible external power supply (10) applied to a computer host (20); the extensible external power supply (10) comprising:
at least two power modules (102, 104) receiving an AC input voltage (Vac1, Vac2) to produce an output power (Po1, Po2);
a power integrated unit (108) electrically connected to the at least two power modules (102, 104) to receive the output power (Po1, Po2) and to produce a DC output voltage (Vdc), the power integrated unit (108) comprising:
a power detection circuit detecting a consumption power of the computer host (20); and
a power control circuit electrically connected to the power detection circuit and the at least two power modules (102, 104) to equally distribute the output power (Po1, Po2) produced from the at least two power modules (102, 104) according to the consumption power of the computer host (20); wherein the extensible external power supply (10) further comprises:
a voltage conversion unit (202) electrically connected to the power integrated unit (108) to receive the DC output voltage (Vdc) and convert different voltage levels of the DC output voltage (Vdc).

**2.** The extensible external power supply (10) of claim 1, wherein each power module (102; 104; 106) is an AC/DC converter.

**3.** The extensible external power supply (10) of claim 1, wherein the extensible external power supply (10) further comprises at least one electromagnetic interference filter to eliminate noise in the AC input voltage (Vac1) and prevent conductive electromagnetic interference.

**4.** The extensible external power supply (10) of claim 1, wherein each power module (102; 104; 106) is contained in a host casing with a plurality of containing spaces.

**5.** The extensible external power supply (10) of claim 1, wherein each AC input voltage (Vac1; Vac2; Vac3) is provided through an AC utility power.

**6.** The extensible external power supply (10) of claim 1, wherein the voltage conversion unit (202) is a DC/DC converter.

**7.** The extensible external power supply (10) of claim 6, wherein the DC/DC converter is a multi-output DC/DC converter.

**8.** The extensible external power supply (10) of claim 6, wherein the DC/DC converter is a buck converter, a forward converter, or a flyback converter.

**9.** The extensible external power supply (10) of claim 1, wherein the voltage conversion unit (202) is disposed inside the computer host (20).
